# EUROPÄISCHE PATENTSCHRIFT

(11) **EP 1 180 407 B1**
(45) Veröffentlichungstag und Bekanntmachung des Hinweises auf die Patenterteilung: **02.11.2005**
(21) Anmeldenummer: 01119203.6
(22) Anmeldetag: 09.08.2001
(51) Int. Cl.: B23B 3/30, B23Q 39/04

(54) **Werkzeugmaschine**
Machine tool
Machine-outil

(30) Priorität: 17.08.2000 DE 10040224
(43) Veröffentlichungstag der Anmeldung: 20.02.2002
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: Beck, Jürgen

(56) Entgegenhaltungen:
- WO-A-01/66289
- DE-A- 3 626 324
- DE-A- 19 723 461
- GB-A- 2 159 450

## Beschreibung

Die Erfindung betrifft eine Werkzeugmaschine, umfassend ein Maschinengestell eine erste an dem Maschinengestell angeordnete Werkstückspindel mit einer um eine erste Spindelachse drehbaren ersten Werkstückaufnahme, eine zweite an dem Maschinengestell angeordnete Werkstückspindel mit einer um eine zweite Spindelachse drehbaren zweiten Werkstückaufnahme, welche der ersten Werkstückaufnahme zugewandt angeordnet ist, wobei die zweite Werkstückspindel in einer Z-Richtung parallel zur ersten Spindelachse und einer X-Richtung quer zur ersten Spindelachse gegenüber dem Maschinengestell verfahrbar ist, einen auf einer Seite der ersten Spindelachse am Maschinengestell angeordneten und mindestens in der X-Richtung durch eine Maschinensteuerung positionsgesteuert verfahrbaren ersten Werkzeugschlitten mit einem auf diesem angeordneten bewegbaren ersten Werkzeugträger, an welchem mehrere Werkzeuge angeordnet sind, und der schaltbar ist, um jeweils eines der ersten Werkzeuge in eine Arbeitsstellung zu bringen, einen auf dem ersten Werkzeugschlitten auf einer der ersten Werkstückspindel abgewandten Seite des ersten Werkzeugträgers angeordneten Werkzeugträger, an welchem weitere der zweiten Werkstückaufnahme zugewandt angeordnete Werkzeuge vorgesehen sind, zur Durchführung einer Bearbeitung eines in der zweiten Werkstückaufnahme gehaltenen Werkstücks mit dem mindestens einen weiteren Werkzeug gleichzeitig mit einer Bearbeitung eines in der ersten Werkstückaufnahme gehaltenen Werkstücks mit einem der ersten Werkzeuge die zweite Werkstückspindel mittels der Maschinensteuerung positionsgesteuert bewegbar und somit der Bewegung des ersten Werkzeugschlittens mit konstanter Relativposition nachführbar und zusätzlich entsprechend der vorgesehenen Bearbeitung des in der zweiten Werkstückaufnahme gehaltenen Werkstücks relativ zum ersten Werkzeugschlitten bewegbar ist.

Eine derartige Werkzeugmaschine ist aus der JP-6000703, 11-01-1994&PA bekannt, bei dieser Werkzeugmaschine wird die Verfahrbarkeit der zweiten Werkstückspindel in X-Richtung quer zur ersten Spindelachse dazu ausgenutzt, in der zweiten Werkstückspindel eine Rückseitenbearbeitung mit einem weiteren Werkzeugträger vorzunehmen, so daß bei einem in der ersten Werkstückaufnahme aufgenommenen Werkstück eine Frontseitenbearbeitung vorgenommen werden kann, für welche ausreichend Raum zur Verfügung steht und beispielsweise noch zusätzlich eine Abstützung des in der ersten Werkstückaufnahme aufgenommenen Werkstücks mittels eines Reitstocks erfolgen kann.

Der Erfindung liegt daher die Aufgabe zugrunde, eine Werkzeugmaschine, insbesondere eine Drehmaschine, der gattungsgemäßen Art derart zu verbessern, daß eine hinsichtlich der Stützseiten optimierte Werkstückbearbeitung möglich ist.

Diese Aufgabe wird bei einer Werkzeugmaschine der eingangs beschriebenen Art erfindungsgemäß dadurch gelöst, daß das erste Gehäuse des ersten Werkzeugträgers auf einer der ersten Werkstückspindel abgewandten Seite des ersten Werkzeugträgers angeordnet ist, daß der weitere Werkzeugträger auf einer dem ersten Werkzeugträger abgewandten Seite des ersten Gehäuses angeordnet ist, daß der weitere Werkzeugträger unabhängig von dem ersten Werkzeugträger schaltbar ist, um eines der weiteren Werkzeuge in eine Arbeitsstellung zu bringen, und daß an dem weiteren Werkzeugträger das In Arbeitsstellung stehende weitere Werkzeug sowohl als Innen- als auch als Außenbearbeitungswerkzeug in allen Stellungen des ersten Werkzeugschlittens einen größere Abstand von der ersten Spindelachse aufweist als das jeweilige in Arbeitsstellung stehende erste Werkzeug des ersten Werkzeugträgers.

Die erfindungsgemäße Lösung sieht vor, daß auf dem ersten Werkzeugschlitten ein weiterer Werkzeugträger für das mindestens eine weitere Werkzeug angeordnet ist, welcher somit die Möglichkeit schafft, einen ausreichend großen Abstand zwischen den Werkzeugen des ersten Werkzeugschlittens und dem mindestens einen weiteren Werkzeug zu schaffen.

Außerdem bietet der Werkzeugträger die Möglichkeit, das weitere Werkzeug in eine Arbeitsstellung oder aus der Arbeitsstellung heraus zu bewegen, so daß hierdurch eine weitere Fiexibilität gewonnen wird.

Der Vorteil der erfindungsgemäßen Lösung ist somit darin zu sehen, daß diese eine gleichzeitige Bearbeitung eines Werkstücks in der ersten Werkstückaufnahme und eines Werkstücks in der zweiten Werkstückaufnahme erlaubt, wobei dies durch den ersten Werkzeugträger und das weitere Werkzeug ermöglicht wird, die jedoch beide auf einem gemeinsamen Werkzeugschlitten sitzen und die erforderliche zusätzliche Achsbewegung durch geeignete Steuerung der Bewegung der zweiten Werkstückspindel erfolgt, die ohnehin bewegbar sein muß, um für eine Rückseitenbearbeitung mit ihrer zweiten Werkstückaufnahme das Werkstück aus der ersten Werkstückaufnahme der ersten Werkstückspindel entnehmen zu können.

Das heißt, daß erfindungsgemäß eine ohnehin vorhandene Bewegbarkeit der zweiten Werkstückspindel dazu ausgenutzt werden kann, ohne weiteren Werkzeugschlitten eine Bearbeitung eines Werkstücks auf der ersten Seite und eines anderen Werkstücks auf der zweiten Seite gleichzeitig durchzuführen, so daß sich dadurch bei einfacher Konstruktion niedrige Stückzeiten ergeben.

Um ausreichend Raum für die Bearbeitung des in der zweiten Werkstückaufnahme gehaltenen Werkstücks relativ zu dem in der ersten Werkstückaufnahme gehaltenen Werkstücks zu erhalten, ist vorgesehen, daß das in der Arbeitsstellung stehende weitere Werkzeug gegenüber dem in der ArbeitsStellung stehenden ersten Werkzeug in Richtung auf die zweite Werkstückaufnahme zu versetzt angeordnet ist, so daß Kollisionen zwischen den Werkstücken untereinander oder den Werkstücken und einem für das andere Werkstück vorgesehene Werkzeug vermieden werden können.

Dadurch daß der weitere Werkzeugträger auf einer der ersten Werkstückspindel abgewandten Seite des ersten Werkzeugträgers angeordnet ist, ist es möglich, die weiteren Werkzeuge in geeigneter Position für eine Bearbeitung eines in der zweiten Werkstückaufnahme gehaltenen Werkstücks zu haben, während gleichzeitig die ersten Werkzeuge in geeigneter Position für eine Bearbeitung des in der ersten Werkzeugaufnahme gehaltenen Werkstücks zur Verfügung stehen.

Besonders günstig ist es dabei, wenn mehrere weitere Werkzeuge vorgesehen sind, welche in einer Arbeitsstellung der zweiten Werkstückaufnahme zugewandt sind, während die ersten Werkzeuge in einer Arbeitsstellung der ersten Werkstückaufnahme zugewandt sind.

Grundsätzlich wäre es im Rahmen der erfindungsgemäßen Lösung denkbar, den ersten Werkzeugschlitten lediglich in X-Richtung bewegbar zu gestalten und die für die Bearbeitung des Werkstücks in der ersten Werkstückaufnahme erforderliche Z-Bewegung durch eine Bewegbarkeit der ersten Werkstückspindel in Z-Richtung, beispielsweise durch einen Schlitten, zu realisieren.

Eine konstruktiv besonders zweckmäßige Lösung sieht jedoch vor, daß der erste Werkzeugschlitten zusätzlich zur X-Richtung in einer Z-Richtung parallel zur ersten Spindelachse durch die Maschinensteuerung gesteuert bewegbar ist.

Die erfindungsgemäße Lösung sieht vor, daß der erste Werkzeugschlitten mit einem weiteren Werkzeugträger versehen ist und daß am weiteren Werkzeugträger das in Arbeitsstellung stehende weitere Werkzeug in allen Stellungen des ersten Werkzeugschlittens einen größeren Abstand von der ersten Spindelachse aufweist als das in Arbeitsstellung stehende erste Werkzeug des ersten Werkzeugträgers.

Dies hat den großen Vorteil, daß durch diese geänderte Positionierung des jeweils in Arbeitsstellung stehenden Werkzeugs die Möglichkeit geschaffen wurde, die Bearbeitung des in der zweiten Werkstückaufnahme gehaltenen Werkstücks mit dem in Arbeitsstellung stehenden weiteren Werkzeug in Richtung quer zur ersten Spindelachse, vorzugsweise in X-Richtung versetzt gegenüber der Bearbeitung des in der ersten Werkstückaufnahme gehaltenen Werkstücks vorzunehmen.

Besonders günstig ist es dabei, wenn der Abstand des in Arbeitsstellung stehenden weiteren Werkzeugs von der ersten Spindelachse um mehr als einen maximal möglichen Werkstückdurchmesser größer ist als der Abstand des in Arbeitsstellung stehenden ersten Werkzeugs von der ersten Spindelachse.

Noch besser ist es, wenn dieser Abstand des in Arbeitsstellung stehenden weiteren Werkzeugs von der ersten Spindelachse um mindestens dem zweifachen maximal möglichen Werkstückdurchmesser größer ist als der Abstand des in Arbeitsstellung stehenden ersten Werkzeugs von der Spindelachse.

Mit dieser Definition ist es grundsätzlich möglich, eine versetzte Bearbeitung des in der zweiten Werkstückaufnahme gehaltenen Werkstücks relativ zur Bearbeitung des in der ersten Werkstückaufnahme gehaltenen Werkstücks zu realisieren.

Die vorstehend genannte Bedingung für die Realisierung der versetzten Bearbeitung kann jedoch dadurch erfüllt werden, daß die Werkzeugträger ungefähr die gleiche Größe aufweisen, daß jedoch die Erstreckung der in Arbeitsstellung stehenden Werkzeuge über den Werkzeugträger hinaus in Richtung quer zur ersten Spindelachse unterschiedlich groß ist. Dies würde es jedoch erforderlich machen, zumindest entweder in dem ersten Werkzeugträger oder dem weiteren Werkzeugträger Sonderwerkzeuge einzusetzen.

Aus diesem Grund sieht eine besonders günstige Lösung vor, daß eine an dem weiteren Werkzeugträger vorgesehene weitere Werkzeugaufnahme des in Arbeitsstellung stehenden weiteren Werkzeugs in allen Stellungen des ersten Werkzeugschlittens einen größeren Abstand von der ersten Spindelachse aufweist als eine an dem ersten Werkzeugträger vorgesehene erste Werkzeugaufnahme des in Arbeitsstellung stehenden ersten Werkzeugs.

Mit dieser Lösung ist sichergestellt, daß bereits die weitere Werkzeugaufnahme des in Arbeitsstellung stehenden weiteren Werkzeugs einen größeren Abstand von der ersten Spindelachse aufweist als die erste Werkzeugaufnahme des in Arbeitsstellung stehenden ersten Werkzeugs, so daß prinzipiell dieselben Werkzeuge sowohl in dem ersten Werkzeugträger als auch in dem weiteren Werkzeugträger eingesetzt werden können.

Vorzugsweise ist der Abstand der weiteren Werkzeugaufnahme des in Arbeitsstellung stehenden weiteren Werkzeugs von der ersten Spindelachse um mindestens den maximal möglichen Durchmesser des Werkstücks, noch besser um mindestens den doppelten maximal möglichen Durchmesser des Werkstücks größer als der Abstand der ersten Werkzeugaufnahme des in Arbeitsstellung stehenden ersten Werkzeugs.

Hinsichtlich der Ausbildung der Werkzeugträger wurden im Zusammenhang mit der bisherigen Erläuterung der einzelnen Ausführungsbeispiele keine näheren Angaben gemacht.

So wäre es beispielsweise im Rahmen der erfindungsgemäßen Lösung denkbar, den mehrere erste Werkzeuge tragenden ersten Werkzeugträger als Linearwerkzeugträger auszuführen.

Eine besonders günstige Lösung für den Einsatz mehrerer erster Werkzeuge sieht jedoch vor, daß der erste Werkzeugträger einen um eine erste Schwenkachse gegenüber einem Gehäuse schwenkbaren Kopf aufweist. Ein derartiger schwenkbarer Kopf kann beispielsweise ein um 90° oder 180° gegenüber dem Gehäuse schwenkbarer Kopf sein. Ein derartiger schwenkbarer Kopf könnte auch mit einem Linearwerkzeugträger kombiniert sein.

Eine zum Einsatz möglichst vieler erster Werkzeuge besonders günstige Lösung sieht jedoch vor, daß der Kopf ein Revolverkopf ist, der um eine Revolverachse als Schwenkachse drehbar ist.

In gleicher Weise könnte auch der weitere Werkzeugträger ein Linearwerkzeugträger sein, an welchem eine Vielzahl weiterer Werkzeuge angeordnet ist.

Auch hier ist es zum Einsatz der weiteren Werkzeuge besonders günstig, wenn der weitere Werkzeugträger einen um eine weitere Schwenkachse gegenüber einem Gehäuse schwenkbaren Kopf aufweist, wobei auch dieser Kopf ein beispielsweise um 90° oder 180° schwenkbarer Kopf sein kann.

Besonders günstig für den Einsatz einer Vielzahl von Werkzeugen ist es jedoch, wenn der Kopf ein Revolverkopf ist, der um eine Revolverachse als Schwenkachse drehbar ist.

Ist sowohl der erste Werkzeugträger ein Mehrfachwerkzeugträger als auch der weitere Werkzeugträger ein Mehrfachwerkzeugträger, so können diese gleichzeitig schaltbar sein. Noch vorteilhafter ist es jedoch, wenn der erste Werkzeugträger und der weitere Werkzeugträger unabhängig voneinander schaltbar sind, um jeweils eines der Werkzeuge in Arbeitsstellung zu bringen.

Insbesondere bei der Lösung, bei welcher ein schwenkbarer Kopf für die Aufnahme der Werkzeuge vorgesehen ist, läßt sich die vorstehend genannte Festlegung des Abstandes der Werkzeuge von der Spindelachse zur versetzten Bearbeitung einfach dadurch realisieren, daß die weitere Schwenkachse in jeder Stellung des ersten Werkzeugschlittens einen größeren Abstand von der ersten Spindelachse aufweist als die erste Schwenkachse, so daß bereits durch die Anordnung der Schwenkachsen an dem ersten Werkzeugschlitten die gewünschten Verhältnisse erreichbar sind.

Eine weitere Möglichkeit, die gewünschten Verhältnisse hinsichtlich der Anordnung der in Arbeitsstellung stehenden Werkzeuge relativ zur ersten Spindelachse zu schaffen, sieht vor, daß der um die weitere Schwenkachse schwenkbare Kopf in radialer Richtung zur weiteren Schwenkachse eine kleinere Erstreckung aufweist als der um die erste Schwenkachse schwenkbare Kopf des ersten Werkzeugträgers, so daß bereits durch die radiale Erstreckung ebenfalls die gewünschte Positionierung der in Arbeitsstellung stehenden Werkzeuge relativ zu ersten Spindelachse erreichbar ist.

Eine besonders günstige Lösung sieht vor, daß sowohl die Schwenkachsen als auch die radiale Erstreckung der Köpfe gleichzeitig, so wie vorstehend beschrieben gewählt werden, um die gewünschte Positionierung der Werkzeuge in unterschiedlichen Abständen zur ersten Spindelachse zu erreichen.

Im Zusammenhang mit der bisherigen Erläuterung der einzelnen Ausführungsbeispiele der erfindungsgemäßen Lösung wurde lediglich von dem ersten Werkzeugschlitten ausgegangen.

Besonders günstig ist es, insbesondere um die Stückzeiten dadurch zu reduzieren, daß noch mehr Werkzeuge in Eingriff kommen, wenn auf einer dem ersten Werkzeugschlitten gegenüberliegenden Seite der ersten Spindelachse ein zweiter Werkzeugschlitten mit einem zweiten Werkzeugträger angeordnet ist. Mit diesem besteht die Möglichkeit, mit insgesamt drei Werkzeugen gleichzeitig zu arbeiten, wobei zwei Werkzeuge an einem Werkstück in Eingriff sind und ein Werkzeug an dem anderen Werkstück.

Dieser zweite Werkzeugträger kann im einfachsten Fall ein Werkzeug tragen. Besonders günstig ist es jedoch, wenn der zweite Werkzeugträger eine Vielzahl von Werkzeugen trägt.

Hinsichtlich der Bewegbarkeit des zweiten Werkzeugträgers wurden im Zusammenhang mit der bisherigen Erläuterung der einzelnen Ausführungsbeispiele keine näheren Angaben gemacht. So wäre es je nach der Art der für die erste Werkstückspindel vorgesehenen Bewegungsachsen denkbar, daß der zweite Werkzeugträger mit der Maschinensteuerung in der X-Richtung positionsgesteuert bewegbar ist, wobei in diesem Fall die erste Werkstückspindel in Z-Richtung gesteuert bewegbar sein müßte.

Eine andere Lösung sieht vor, daß der zweite Werkzeugträger mit der Maschinensteuerung in Z-Richtung positionsgesteuert bewegbar ist.

Eine besonders günstige Lösung sieht jedoch vor, daß der zweite Werkzeugträger mit der Maschinensteuerung sowohl in X-Richtung als auch in Z-Richtung positionsgesteuert bewegbar ist, da sich diese Art der Bewegbarkeit des zweiten Werkzeugträgers günstig mit der Bewegbarkeit des ersten Werkzeugträgers ebenfalls in X-Richtung und Z-Richtung ergänzt, so daß beide Werkzeugträger dazu eingesetzt werden können, das in der ersten Werkstückaufnahme gehaltene Werkstück zu bearbeiten.

Ferner sind vorteilhafterweise auch beide Werkzeugträger dazu einsetzbar, das in der zweiten Werkzeugaufnahme gehaltene Werkstück zu bearbeiten, zumindest dann, wenn die zweite Werkstückaufnahme mit der zweiten Spindelachse so angeordnet ist, daß die zweite Spindelachse mit der ersten Spindelachse fluchtet.

Die Ausbildung des zweiten Werkzeugträgers kann dabei, entsprechend dem im Zusammenhang mit dem ersten Werkzeugträger erläuterten Möglichkeiten, erfolgen.

Auch der zweite Werkzeugträger kann beispielsweise als Linearwerkzeugträger ausgebildet sein.

Besonders günstig ist es jedoch, wenn auch der zweite Werkzeugträger einen um eine zweite Schwenkachse gegenüber einem zweiten Gehäuse schwenkbaren Kopf aufweist, wobei eine besonders zweckmäßige Lösung vorsieht, daß dieser Kopf ein Revolverkopf ist, der um eine Revolverachse als Schwenkachse drehbar ist.

Im Zusammenhang mit der bisherigen Erläuterung der Ausführungsbeispiele wurde nicht näher darauf eingegangen, ob eine zusätzliche Abstützung der Werkstücke erforderlich ist und wie diese erfolgen soll.

Insbesondere beim Bearbeiten von Wellenteilen mit einer Werkzeugmaschine gemäß der vorliegenden Erfindung hat es sich als günstig erwiesen, wenn am Maschinengestell ein bewegbarer Reitstock angeordnet ist, welcher von einer inaktiven Stellung in eine aktive, zu einer der Spindelachsen koaxiale Stellung in den Arbeitsraum hineinbewegbar ist.

Diese Lösung hat den großen Vorteil, daß mit einem derartigen Reitstock bei Wellenteilen noch eine zusätzliche Abstützung des Werkstücks möglich ist, die entweder zu einer höheren Genauigkeit beiträgt und/oder kürzere Bearbeitungszeiten erlaubt.

Besonders günstig ist es dabei, wenn der Reitstock in seiner aktiven Stellung koaxial zur ersten Spindelachse angeordnet ist und somit dazu dient, ein in der ersten Werkstückaufnahme gehaltenes Werkstück noch zusätzlich abzustützen.

Hinsichtlich der inaktiven Stellung des Reitstocks wurden dabei noch keine näheren Angaben gemacht. So wäre es beispielsweise denkbar, den Reitstock auch in der inaktiven Stellung im Bereich des Arbeitsraums zu halten.

Um Kollisionen zu vermeiden ist es jedoch besonders günstig, wenn der Reitstock in der inaktiven Stellung außerhalb des Arbeitsraums angeordnet ist.

Grundsätzlich wäre es dabei denkbar, den Reitstock beispielsweise auf einem Schlitten anzuordnen und mittels eines Schlittens in den Arbeitsraum zu bewegen.

Eine andere, besonders günstige Lösung sieht jedoch vor, daß der Reitstock an einer im wesentlichen außerhalb des Arbeitsraums angeordneten Transfereinrichtung gehalten ist, so daß durch das Einbringen des Reitstocks keine wesentliche negative Beeinflussung des Arbeitsraums erfolgt.

Besonders günstig ist es dabei, wenn die Transfereinrichtung einen den Reitstock tragenden Arm aufweist, mit welchem dieser in den Arbeitsraum hineinbewegbar ist, so daß durch das Hineinbewegen des Reitstocks in den Arbeitsraum lediglich eine unwesentliche Einschränkung der Bearbeitungsmöglichkeiten im Arbeitsraum erfolgt.

Besonders zweckmäßig ist es dabei, wenn die Transfereinrichtung den Reitstock von der aktiven Stellung in die inaktive Stellung oder umgekehrt längs einer Bahn bewegt, die auf einer dem ersten Werkzeugschlitten gegenüberliegenden Seite der ersten Spindelachse verläuft, so daß für das Bewegen des Reitstocks von der aktiven Stellung in die inaktive Stellung oder umgekehrt ein Bereich des Arbeitsraums tangiert wird, der die Möglichkeit eröffnet, den Reitstock möglichst kollisionsfrei durch den Arbeitsraum zu bewegen.

Weitere Merkmale und Vorteil der Erfindung sind Gegenstand der nachfolgenden Beschreibung sowie der zeichnerischen Darstellung eines Ausführungsbeispiels mit einer Variante.

In der Zeichnung zeigen:
- Fig. 1: eine Draufsicht auf das Ausführungsbeispiel der erfindungsgemäßen Werkzeugmaschine in Richtung des Pfeils A in Fig. 2;
- Fig. 2: einen Schnitt längs Linie 2-2 in Fig. 1;
- Fig. 3: einen Schnitt längs Linie 3-3 in Fig. 1;
- Fig. 4: eine Ansicht entsprechend Fig. 1 mit Darstellung einer gleichzeitigen Bearbeitung eines Werkstücks in einer ersten Werkstückaufnahme und eines weiteren Werkstücks in einer zweiten Werkstückaufnahme durch die erfindungsgemäße Werkzeugmaschine;
- Fig. 5: eine Ansicht entsprechend Fig. 1 mit Bearbeitung eines in der zweiten Werkstückaufnahme aufgenommenen Werkstücks mit Werkzeugen eines ersten Werkzeugträgers und eines zweiten Werkzeugträgers;
- Fig. 6: eine Darstellung einer Variante des Ausführungsbeispiels mit Einsatz eines Reitstocks;
- Fig. 7: eine Ansicht in Richtung des Pfeils B in Fig. 6 und
- Fig. 8: eine Ansicht in Richtung des Pfeils C in Fig. 7 allerdings mit nicht dargestellten Werkzeugschlitten.

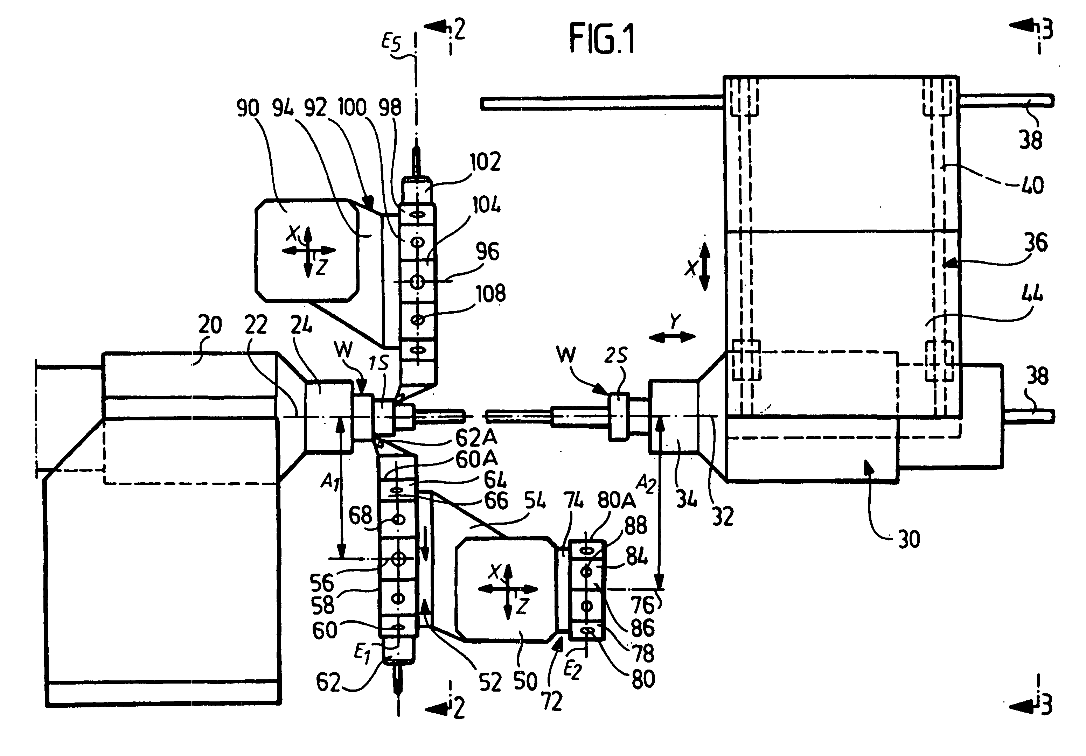

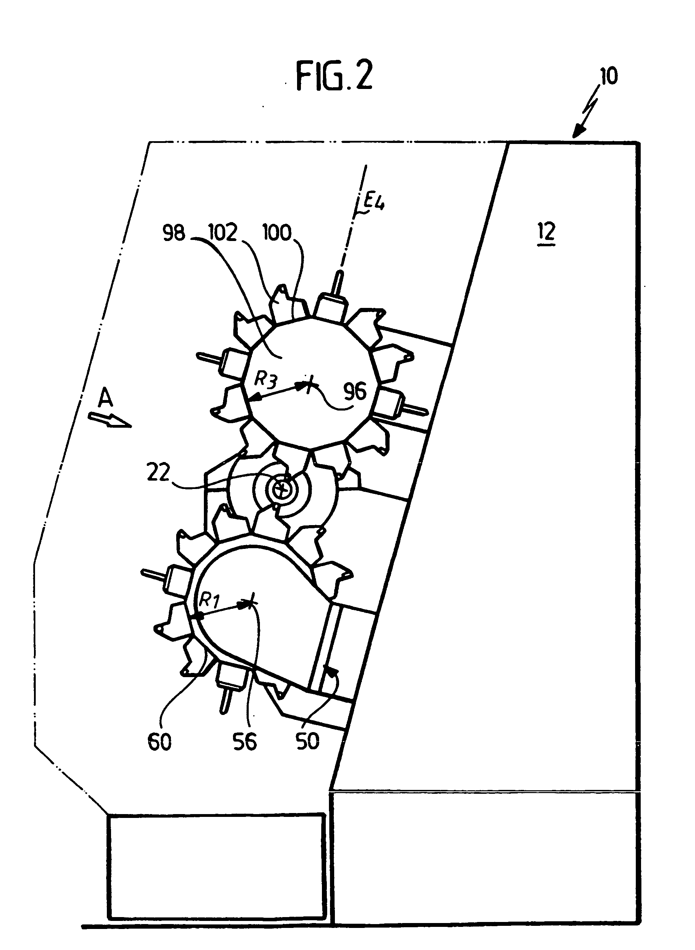

Ein Ausführungsbeispiel einer erfindungsgemäßen Werkzeugmaschine umfaßt, wie in Fig. 1 bis 3 dargestellt, ein Maschinengestell 10 mit einem Maschinenbett 12, an welchem eine erste Werkstückspindel 20 stationär angeordnet ist, die mit einer um eine erste Spindelachse 22 drehbaren Werkstückaufnahme 24 versehen ist, in welche ein Werkstück W zur Bearbeitung auf einer ersten Seite 1S einsetzbar ist.

Ferner ist an dem Maschinenbett 12 der ersten Werkstückspindel gegenüberliegend eine zweite Werkstückspindel 30 angeordnet, deren um eine zur ersten Spindelachse 22 parallele zweite Spindelachse 32 drehbare Werkstückaufnahme 34 der ersten Werkstückaufnahme 24 zugewandt, jedoch im Abstand von dieser angeordnet ist.

Die zweite Werkstückspindel 30 sitzt ihrerseits auf einem als Ganzes mit 36 bezeichneten Kreuzschlitten, der eine Bewegung der zweiten Werkstückspindel 30 in Richtung einer parallel zu den Spindelachsen 22 und 32 verlaufenden Z-Richtung und einer senkrecht zu den Spindelachsen 22 und 32 verlaufenden X-Richtung erlaubt, wobei vorzugsweise Z-Führungen 38 unmittelbar auf dem Maschinenbett 12 angeordnet sind, während X-Führungen 40 des Kreuzschlittens 36 auf einem an den Z-Führungen 33 geführten Z-Schlitten 42 des Kreuzschlittens 36 angeordnet sind und ihrerseits einen an den X-Führungen 40 geführten X-Schlitten 44 des Kreuzschlittens 36 in der X-Richtung geführt lagern.

Damit ist die zweite Werkstückspindel 30 einerseits in eine in Fig. 1 dargestellte Stellung bringbar, in welcher die zweite Spindelachse 32 mit der ersten Spindelachse 22 fluchtet, um das beispielsweise auf der ersten Seite 1S bearbeitete Werkstück W mit der zweiten Werkstückaufnahme 34 aus der ersten Werkstückaufnahme 24 zu übernehmen und damit eine Bearbeitung des Werkstücks W auf einer zweiten Seite 2S zuzulassen, welche der ersten Werkstückaufnahme 24 zugewandt ist.

Zur Bearbeitung des Werkstücks W ist ferner ein erster Werkzeugschlitten 50 am Maschinenbett 12 vorgesehen, welcher als Kreuzschlitten ausgebildet und in der X-Richtung senkrecht zur ersten Spindelachse 22 sowie in der Z-Richtung parallel zur ersten Spindelachse 22 bewegbar ist.

An dem ersten Werkzeugschlitten 50 ist einerseits ein als Ganzes mit 52 bezeichneter erster Werkzeugträger angeordnet, welcher beispielsweise als Werkzeugrevolver ausgebildet ist und ein fest auf dem ersten Werkzeugschlitten 50 sitzendes erstes Revolvergehäuse 54 aufweist, an welchem um eine erste Revolverachse 56 drehbar ein erster Revolverkopf 58 gehalten ist, der mit einer Vielzahl von ersten Werkzeugaufnahmen 60 versehen ist, in welche erste Werkzeuge 62 einsetzbar sind. Die ersten Werkzeuge 62 können sowohl Innen- als auch Außenbearbeitungswerkzeuge sein. Die ersten Werkzeugaufnahmen 60 liegen dabei in einer Ebene E1, welche vorzugsweise senkrecht zur ersten Spindelachse 22 verläuft, während die erste Revolverachse 56 vorzugsweise parallel zur ersten Spindelachse 22 ausgerichtet ist.

Ferner sitzen die ersten Werkzeugaufnahmen 60 an einem Außenumfang 64 des ersten Revolverkopfes 58 und umfassen vorzugsweise den Außenumfang 64 bildende Planflächen 66 sowie in den ersten Revolverkopf 58 hineinreichende Einstecklöcher 68.

Vorzugsweise ist der erste Werkzeugträger 52 so angeordnet, daß dieser der ersten Werkstückspindel 20 zugewandt ist, wobei insbesondere der erste Revolverkopf 58 auf einer der ersten Werkstückspindel 20 zugewandten Seite des ersten Werkzeugschlittens 50 sitzt.

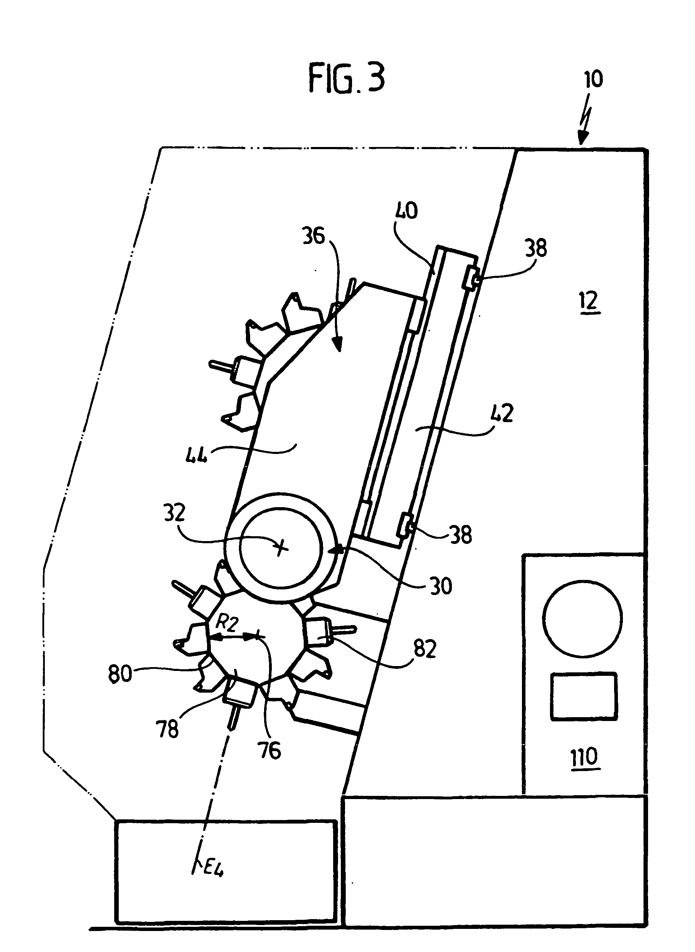

Ferner ist am ersten Werkzeugschlitten 50 noch ein weiterer Werkzeugträger 72 angeordnet, welcher ebenfalls vorzugsweise als Revolver ausgebildet ist und ein auf dem ersten Werkzeugschlitten 50 sitzendes weiteres Revolvergehäuse 74 aufweist, an welchem um eine weitere Revolverachse 76 drehbar, und zwar unabhängig von der Drehung des ersten Revolverkopfes 58, ein weiterer Revolverkopf 78 angeordnet ist, der weitere Werkzeugaufnahmen 80 aufweist, in welche, wie in Fig. 3 dargestellt, weitere Werkzeuge 82 einsetzbar sind, wobei die weiteren Werkzeugaufnahmen 80 an einem Außenumfang 84 des weiteren Revolverkopfes 78 angeordnet sind und den Außenumfang 64 bildende Planflächen 86 sowie Einstecklöcher 88 aufweisen. Die weiteren Werkzeuge 82 können sowohl Innen- als auch Außenbearbeitungswerkzeuge sein.

Auch bei dem weiteren Werkzeugträger 72 liegen die weiteren Werkzeugaufnahmen 80 in einer Ebene E2, welche parallel zur Ebene E1 und somit ebenfalls senkrecht zur ersten Spindelachse 22 verläuft.

Allerdings ist der weitere Revolverkopf 78 mit seiner weiteren Revolverachse 76 derart relativ zum ersten Revolverkopf 58 und dessen erster Revolverachse 56 so angeordnet, daß die erste Revolverachse 56 einen Abstand A1 von der ersten Spindelachse 22 aufweist, der kleiner ist als ein Abstand A2 der weiteren Revolverachse 76 von der ersten Spindelachse 22.

Ferner ist der erste Revolverkopf 58 so ausgebildet, daß dessen erste Werkzeugaufnahmen 60 in einem radialen Abstand R1 von der ersten Revolverachse 56 angeordnet sind, welcher größer ist als ein radialer Abstand R2 der weiteren Werkzeugaufnahmen 80 von der weiteren Revolverachse 76.

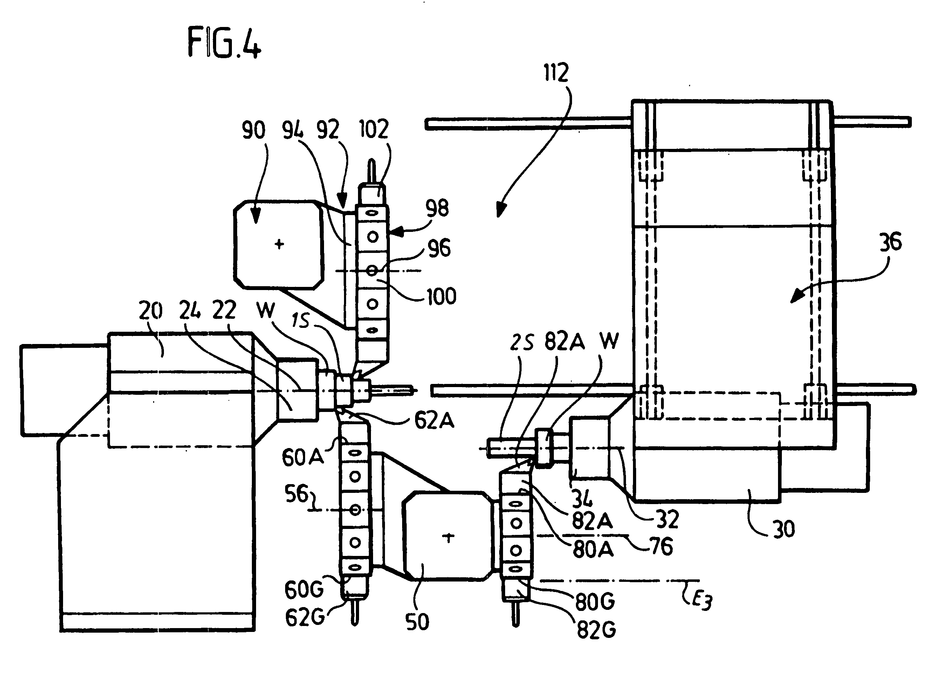

Damit liegt insgesamt jeweils die erste Werkzeugaufnahme 60A des in Arbeitsstellung stehenden ersten Werkzeugs 62A näher an der ersten Spindelachse 22 als die in Arbeitsstellung stehende weitere Werkzeugaufnahme 80A des entsprechenden in Arbeitsstellung stehenden weiteren Werkzeugs 82A, wie in Fig. 4 dargestellt.

Darüber hinaus liegen durch diese Anordnung des ersten Revolverkopfes 58 und des weiteren Revolverkopfes 78 vorzugsweise die Werkzeugaufnahmen 60G und 80G, die den entsprechenden in Arbeitsstellung stehenden Werkzeugaufnahmen 60A bzw. 80A gegenüberliegen, vorzugsweise nahe einer Ebene E3, welche ungefähr parallel zur ersten Spindelachse 22 verläuft.

Damit wird für die in diesen Werkzeugaufnahmen 60G und 80G eingesetzten Werkzeuge 62G und 82G beim Verfahren des ersten Werkzeugschlittens 50 stets derselbe Raumbedarf quer zur ersten Spindelachse 22 benötigt, während die in Arbeitsstellung stehenden Werkzeuge 62A und 82A eine unterschiedliche Positionierung bei gleichzeitiger Bearbeitung zweier unterschiedlicher Werkstücke W möglich machen. So ist, wie in Fig. 4 dargestellt, das in der ersten Werkstückaufnahme 24 gehaltene Werkstück W koaxial zur ersten Spindelachse 22 positioniert und wird durch das in Arbeitsstellung stehende erste Werkzeug 62A bearbeitet, während das in der zweiten Werkstückaufnahme 34 gehaltene Werkstück W, das um die zweite Spindelachse 32 drehbar ist, in radialem Abstand zur ersten Spindelachse 22 positioniert ist, um an diesem eine Bearbeitung mit dem in Arbeitsstellung stehenden weiteren Werkzeug 82A durchzuführen.

Hierzu sind vorzugsweise die erste Spindelachse 22 und die erste Revolverachse 56 sowie die weitere Revolverachse 76 und die zweite Spindelachse 32 stets in einer gemeinsamen Ebene E4 angeordnet, unabhängig von der Position des ersten Werkzeugschlittens 50 und der zweiten Werkstückspindel 30.

Darüber hinaus ist an dem Maschinenbett 12, wie in den Fig. 1, 2, 4 und 5 dargestellt, ein zweiter Werkzeugschlitten 90 vorgesehen, welcher ebenfalls als Kreuzschlitten ausgebildet und daher in X-Richtung und Z-Richtung relativ zum Maschinenbett 12 bewegbar ist.

Der zweite Werkzeugschlitten 90 trägt seinerseits einen zweiten Werkzeugträger 92, welcher ebenfalls als Revolver ausgebildet ist und ein zweites Revolvergehäuse 94, sowie einen an diesem zweiten Revolvergehäuse 94 um eine zweite Revolverachse 96 drehbaren zweiten Revolverkopf 98 aufweist, der ebenfalls mit zweiten Werkzeugaufnahmen 100 versehen ist, in welche zweite Werkzeuge 102 einsetzbar sind, wobei die Werkzeugaufnahmen 100 vorzugsweise in einer senkrecht zur ersten Spindelachse 22 verlaufenden Ebene E5 liegen. Die zweiten Werkzeuge 102 können sowohl Innen- als auch Außenbearbeitungswerkzeuge sein.

Auch die zweiten Werkzeugaufnahmen 100 sind vorzugsweise an einem Außenumfang 104 des zweiten Revolverkopfes 98 angeordnet und umfassen eine den Außenumfang 104 bildende Planfläche 106 sowie ein sich in den zweiten Revolverkopf 98 hineinerstreckendes Einsteckloch 108.

Vorzugsweise sind die zweiten Werkzeugaufnahmen 100 in einem Abstand R3 von der zweiten Revolverachse 96 angeordnet, welcher ungefähr gleich dem Abstand R1, vorzugsweise mit diesem identisch ist, so daß der zweite Revolverkopf 98 mit dem ersten Revolverkopf 58 identisch ausgebildet sein kann.

Auch die zweite Revolverachse 96 liegt dabei in der Ebene E4, unabhängig von der Stellung des zweiten Werkzeugschlittens 90 relativ zum Maschinenbett 12.

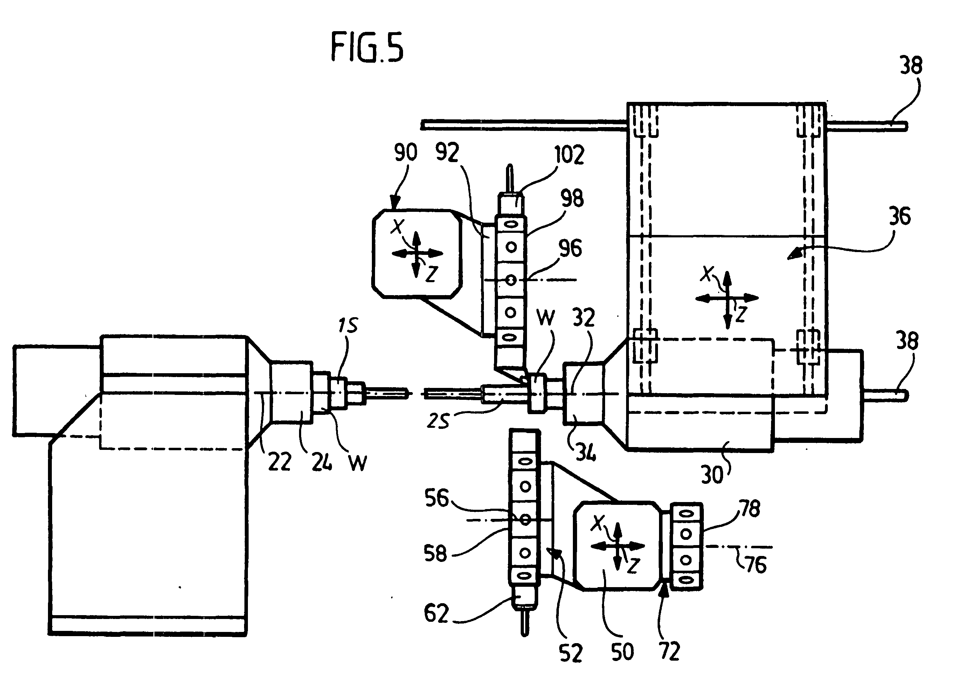

Bei der erfindungsgemäßen Werkzeugmaschine besteht nun die Möglichkeit, mit den ersten Werkzeugen 62 und den zweiten Werkzeugen 102 entweder das Werkstück W auf der ersten Seite 1S zu bearbeiten, wenn das Werkstück W in der ersten Werkstückaufnahme 24 gehalten ist, wie in Fig. 1 dargestellt, oder, wie in Fig. 5 dargestellt, mit den ersten Werkzeugen 62 und den zweiten Werkzeugen 102 das Werkstück W auf der Seite 2S zu bearbeiten, wenn dieses Werkstück W in der zweiten Werkstückaufnahme 34 der zweiten Werkstückspindel 30 gehalten ist, wobei in diesem Fall vorzugsweise die zweite Spindelachse 32 koaxial zur ersten Spindelachse 22 ausgerichtet ist. Eine derartige Bearbeitung erfolgt beispielsweise nach einer Übergabe des Werkstücks W von der ersten Werkstückaufnahme 24 in die zweite Werkstückaufnahme 34.

Darüber hinaus besteht mit der erfindungsgemäßen Werkzeugmaschine aber auch die Möglichkeit, mit den ersten Werkzeugen 62 und den zweiten Werkzeugen 102 gleichzeitig das Werkstück W auf der ersten Seite 1S zu bearbeiten, wenn das Werkstück W in der ersten Werkstückaufnahme 24 gehalten ist, wobei diese Bearbeitung bei einer Drehung des Werkstücks W um die erste Spindelachse 22 erfolgt und gleichzeitig aber auch noch mit den weiteren Werkzeugen 82 ein Werkstück W in der zweiten Werkstückaufnahme 34 auf der zweiten Seite 2S zu bearbeiten, wie dies in Fig. 4 dargestellt ist.

Für alle diese Bearbeitungen ist die erfindungsgemäße Werkzeugmaschine mit einer in Fig. 3 angedeuteten Maschinensteuerung 110 versehen, welche die erste Werkstückspindel 20, die zweite Werkstückspindel 30 ansteuert sowie den Kreuzschlitten 36 zur Positionierung der zweiten Werkstückspindel 30 relativ zur ersten Werkstückspindel 20 und außerdem den ersten Werkzeugschlitten 50 und den zweiten Werkzeugschlitten 90 zu Relativpositionierung der ersten Werkzeuge 62, der zweiten Werkzeuge 102 und indirekt damit auch der weiteren Werkzeuge 82 positionsgenau ansteuert.

Dabei arbeitet die Steuerung 110 so, daß der erste Werkzeugschlitten 50 und der zweite Werkzeugschlitten 90 relativ zum Maschinenbett 12 so gesteuert werden, daß die Bearbeitung des in der ersten Werkstückaufnahme 24 gehaltenen Werkstücks W auf der ersten Seite 15 entsprechend der gewünschten Bearbeitungsvorgänge erfolgen kann.

Ferner steuert die Maschinensteuerung den Kreuzschlitten 36 grundsätzlich so, daß dieser hinsichtlich seiner Bewegungen in X-Richtung und Z-Richtung synchron den Bewegungen des ersten Werkzeugschlittens 50 in X-Richtung und Z-Richtung folgt, so daß als Ausgangsbasis das in der zweiten Werkstückaufnahme 34 gehaltene Werkstück W sämtliche Bewegungen des in Arbeitsstellung stehenden weiteren Werkzeugs 82A folgt, und zusätzlich noch so, daß eine Relativbewegung zwischen dem weiteren Werkzeug 82A und dem in der zweiten Werkstückaufnahme 34 gehaltenen Werkstück W dergestalt erfolgt, daß das Werkstück W entsprechend einem gewünschten Bearbeitungsvorgang die vorgegebene Kontur erhält.

Damit besteht bei der erfindungsgemäßen Lösung die Möglichkeit, sowohl das in der ersten Werkstückaufnahme 24 gehaltene Werkstück W auf der ersten Seite 1S mit zwei Werkzeugen 62 und 102 4-achsig, das heißt mit den X- und Z-Achsen der beiden Werkzeugschlitten 50 und 90, zu bearbeiten, und gleichzeitig mit einem weiteren Werkzeug 82A das in der zweiten Werkstückaufnahme 34 gehaltene Werkstück W auf der zweiten Seite 2S 2-achsig zu bearbeiten, wobei diese 2-achsige Bewegung daraus resultiert, daß der Kreuzschlitten 36 nicht nur synchron den Bewegungen des ersten Werkzeugschlittens 50 in X- und Z-Richtung folgt, sondern zusätzlich noch die für die 2-achsige Bearbeitung des Werkstücks W mit dem weiteren Werkzeug 82A erforderliche Relativbewegung zwischen dem Werkstück W und dem Werkzeug 82A erzeugt.

Der Vorteil dieser Lösung ist darin zu sehen, daß ein Arbeitsraum 112, in welchem sich die Werkzeuge 62, 82 und 102 bewegen, kompakt ausgeführt sein kann, aufgrund des möglichen Versatzes der zweiten Spindelachse 32 relativ zur ersten Spindelachse 22 in Richtung des ersten Werkzeugschlittens 50 bei der Bearbeitung des in der zweiten Werkstückaufnahme 34 gehaltenen Werkstücks W durch eines der weiteren Werkzeuge 82, so daß beispielsweise ein weit in Richtung der ersten Spindelachse 22 über die erste Werkstückaufnahme 24 überstehendes Werkstück W mit seiner ersten Seite 1S nicht mit der zweiten Seite 2S des Werkstücks W in der zweiten Werkstückaufnahme 34 bei Bearbeitung desselben durch das Werkzeug 82A kollidieren kann.

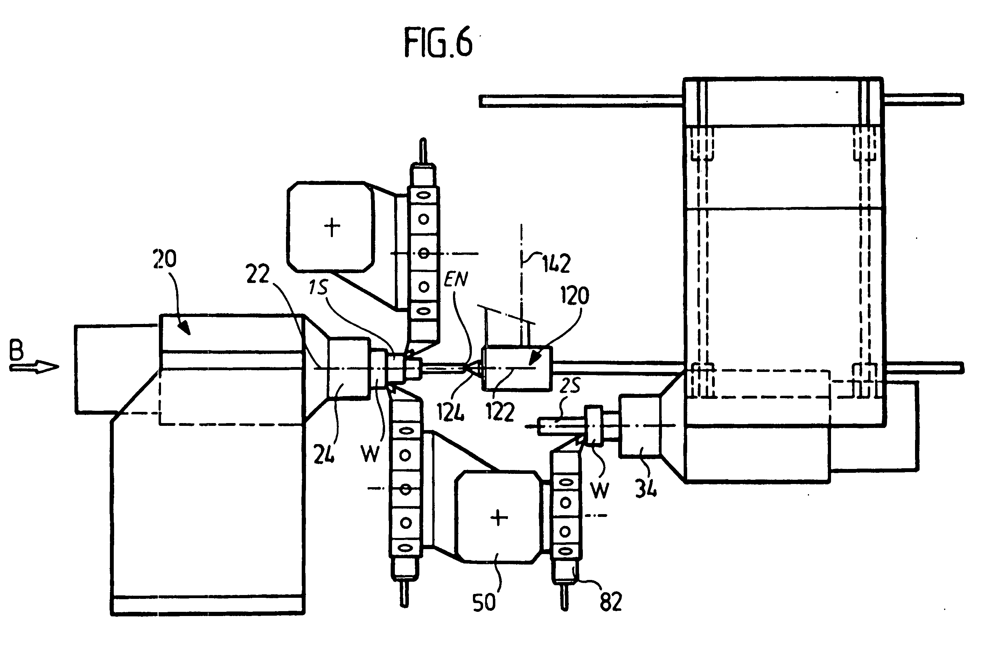

Eine bevorzugten Variante des beschriebenen Ausführungsbeispiels der erfindungsgemäßen Werkzeugmaschine, welche in den Fig. 6 bis 8 dargestellt ist, sieht für den Fall der Bearbeitung des in der ersten Werkstückaufnahme aufgenommenen Werkzeugs W auf seiner Seite 1S noch die Abstützung desselben an seinem der Werkstückaufnahme 24 abgewandten Ende EN durch einen Reitstock 120 mit einer um eine Achse 122 drehbaren Aufnahme 124 für das Ende EN vor.

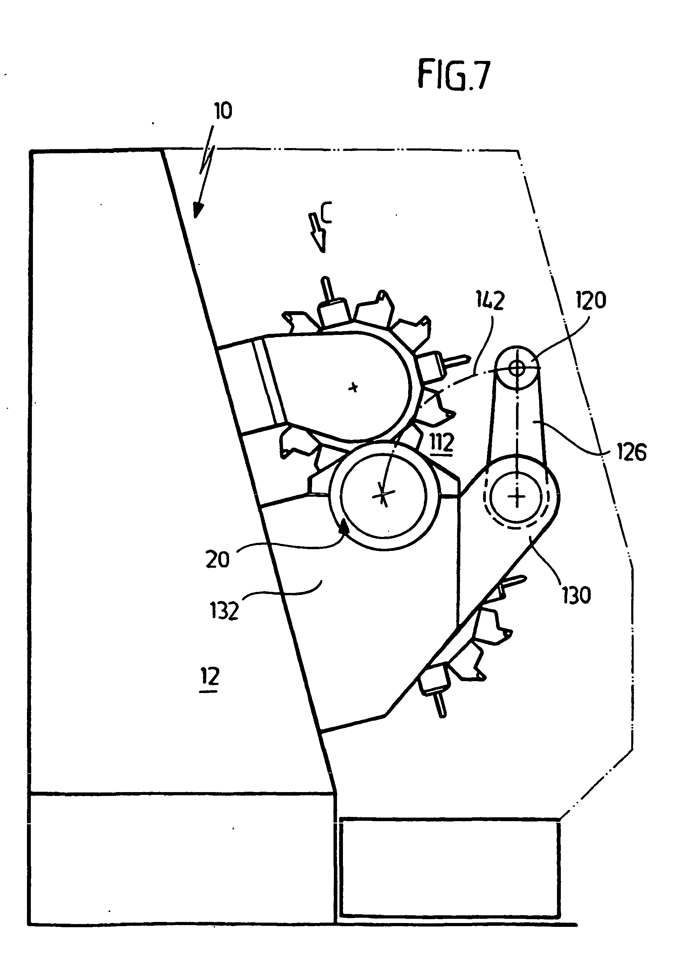

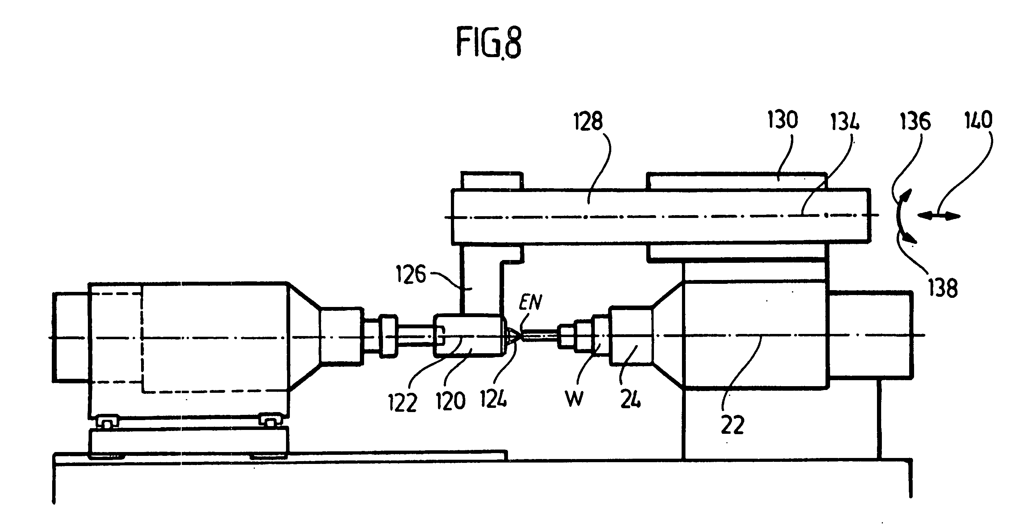

Der Reitstock 120 ist dabei, wie in Fig. 7 und 8 dargestellt, beispielsweise an einem Schwenkarm 126 gehalten, der seinerseits wiederum an einer Welle 128 gehalten ist, die ihrerseits in einer Wellenaufnahme 130 gelagert ist, wobei die Wellenaufnahme 130 grundsätzlich an einer beliebigen Stelle des Maschinenbetts 12 angeordnet sein könnte. Eine besonders günstige Lösung sieht vor, daß die Wellenaufnahme 130 auf einem Lagergehäuse 132 für die erste Werkstückspindel 20 sitzt und über dieses an dem Maschinenbett 12 des Maschinengestells 10 abgestützt ist.

Die Wellenaufnahme 130 lagert bei der erfindungsgemäßen Lösung die Welle 128 so, daß diese einerseits um eine Wellenachse 134 in entgegengesetzten Drehrichtungen 136 und 138 relativ zur Wellenaufnahme 130 drehbar ist und andererseits in einer Verschieberichtung 140 parallel zur Wellenachse 134 verschiebbar ist, wobei die Verschieberichtung 140 wiederum vorzugsweise parallel zur ersten Spindelachse 22 verläuft, so daß der Reitstock 120 durch Verschieben der Welle 128 in Richtung 140 relativ zur Wellenaufnahme 130 in verschiedenen Z-Positionen relativ zur ersten Werkstückaufnahme 24 positionierbar ist, um je nach Ausdehnung des Werkstücks W in Richtung der ersten Spindelachse 22 dieses an seinem Ende EN abstützen zu können.

Vorzugsweise ist für den Reitstock 120 eine aktive Stellung vorgesehen, in welcher die Achse 122 der Aufnahme 124 desselben mit der ersten Spindelachse 22 fluchtet und somit eine Abstützung des Endes EN des Werkstücks W möglich ist, wobei sich in dieser aktiven Stellung der Reitstock 120 in dem Arbeitsraum 112 befindet, während in einer inaktiven Stellung, dargestellt in Fig. 7, der Reitstock 120 außerhalb des Arbeitsraums 112 positionierbar ist.

Dabei ist der Reitstock 120 durch Verschwenken der Welle 128 in den Drehrichtungen 136 oder 138 von der inaktiven Stellung in die aktive Stellung und umgekehrt bewegbar, wobei sich der Reitstock 120 längs einer Kreisbahn 142 zwischen der aktiven Stellung und der inaktiven Stellung bewegt.

Vorzugsweise sind dabei die aktive Stellung und die inaktive Stellung des Reitstocks 120 durch Endanschläge für die Drehbewegung der Welle 128 um die Wellenachse 134 vorgegeben.

Die Vorteile der erfindungsgemäßen Bearbeitung des in der zweiten Werkstückaufnahme 34 aufgenommenen Werkstücks W zur Bearbeitung der zweiten Seite 2S mittels einem der weiteren Werkzeuge 82 sind besonders augenfällig bei der Verwendung des Reitstocks 120, da in diesem Fall das in der zweiten Werkstückaufnahme 34 gehaltene Werkstück W bezüglich der ersten Spindelachse 22 in Richtung des ersten Werkzeugschlittens 50 seitlich versetzt bearbeitet werden kann und sich dabei in Z-Richtung auf die erste Werkstückspindel 20 zu so weit erstrecken kann, daß dieses Werkstück W zumindest abschnittsweise sich parallel neben dem Reitstock 120 erstreckt, so daß der Arbeitsraum 112 in der Z-Richtung äußerst kompakt ausgebildet sein kann.

Vorzugsweise verläuft hierzu die Kreisbahn 162 längs welcher der Reitstock 120 zwischen der aktiven und der inaktiven Stellung bewegbar ist, quer zur ersten Spindelachse 22, und zwar auf einer dem ersten Werkzeugschlitten 50 gegenüberliegenden Seite der ersten Spindelachse 122, so daß der Reitstock 120 im Abstand von dem zweiten Revolverkopf 98 und ungefähr parallel zu diesem bewegbar ist.

Zusätzlich zu den bislang beschriebenen Funktionen läßt sich bei dieser Variante des Ausführungsbeispiels vorzugsweise der Reitstock 120 ebenfalls gesteuert durch die Maschinensteuerung 110 zwischen der aktiven und der inaktiven Stellung bewegen, wobei die Maschinensteuerung 110 die Drehung der Welle 128 in den Drehrichtungen 136 oder 138 und auch die Verschiebung der Welle 128 in der Verschieberichtung 140 steuert.

## Patentansprüche

1. Werkzeugmaschine umfassend
ein Maschinengestell (10),
eine erste an dem Maschinengestell (10) angeordnete Werkstückspindel (20) mit einer um eine erste Spindelachse (22) drehbaren ersten Werkstückaufnahme (24),
eine zweite an dem Maschinengestell (10) angeordnete Werkstückspindel (30) mit einer um eine zweite Spindelachse (32) drehbaren zweiten Werkstückaufnahme (34), welche der ersten Werkstückaufnahme (24) zugewandt angeordnet ist, wobei die zweite Werkstückspindel (30) in einer Z-Richtung parallel zur ersten Spindelachse (22) und einer X-Richtung quer zur ersten Spindelachse (22) gegenüber dem Maschinengestell (10) verfahrbar ist,
einen auf einer Seite der ersten Spindelachse (22) am Maschinengestell (10) angeordneten und mindestens in der X-Richtung durch eine Maschinensteuerung (110) positionsgesteuert verfahrbaren ersten Werkzeugschlitten (50) mit einem auf diesem angeordneten bewegbaren ersten Werkzeugträger (52), an welchem mehrere Werkzeuge (62) angeordnet sind, und der schaltbar ist, um jeweils eines der ersten Werkzeuge (62) in eine Arbeitsstellung zu bringen,
einen auf dem ersten Werkzeugschlitten (50) auf einer der ersten Werkstückspindel (20) abgewandten Seite des ersten Werkzeugträgers (52) angeordneten Werkzeugträger (72), an welchem weitere der zweiten Werkstückaufnahme (34) zugewandt angeordnete Werkzeuge (82) vorgesehen sind, wobei zur Durchführung einer Bearbeitung eines in der zweiten Werkstückaufnahme (34) gehaltenen Werkstücks (W) mit dem mindestens einen weiteren Werkzeug (82) gleichzeitig mit einer Bearbeitung eines in der ersten Werkstückaufnahme (24) gehaltenen Werkstücks (W) mit einem der ersten Werkzeuge (62) die zweite Werkstückspindel (30) mittels der Maschinensteuerung (110) positionsgesteuert bewegbar und somit der Bewegung des ersten Werkzeugschlittens (50) mit konstanter Relativposition nachführbar und zusätzlich entsprechend der vorgesehenen Bearbeitung des in der zweiten Werkstückaufnahme (34) gehaltenen Werkstücks (W) relativ zum ersten Werkzeugschlitten (50) bewegbar ist,
**dadurch gekennzeichnet, daß** das erste Gehäuse (54) des ersten Werkzeugträgers (52) auf einer der ersten Werkstückspindel (20) abgewandten Seite des ersten Werkzeugträgers (52) angeordnet ist, daß der weitere Werkzeugträger (72) auf einer dem ersten Werkzeugträger (52) abgewandten Seite des ersten Gehäuses (54) angeordnet ist, daß der weitere Werkzeugträger (72) unabhängig von dem ersten Werkzeugträger (52) schaltbar ist, um eines (82A) der weiteren Werkzeuge (82) In eine Arbeitsstellung zu bringen, und daß an dem weiteren Werkzeugträger (72) das In Arbeltsstellung stehende weitere Werkzeug (82) sowohl als Innen- als auch als Außenbearbeitungswerkzeug in allen Stellungen des ersten Werkzeugschlittens (50) einen größeren Abstand von der ersten Spindelachse (22) aufweist als das jeweilige in Arbeitsstellung stehende erste Werkzeug (62) des ersten Werkzeugträgers (52).

2. Werkzeugmaschine nach Anspruch 1, **dadurch gekennzeichnet, daß** die weiteren Werkzeuge (82) in einer Arbeitsstellung der zweiten Werkstückaufnahme (34) zugewandt sind.

3. Werkzeugmaschine nach einem der voranstehenden Ansprüche, **dadurch gekennzeichnet, daß** der erste Werkzeugschlitten (50) zusätzlich zur X-Richtung in einer Z-Richtung parallel zur ersten Spindelachse (22) durch die Maschinensteuerung (110) gesteuert bewegbar ist.

4. Werkzeugmaschine nach einem der voranstehenden Ansprüche, **dadurch gekennzeichnet**, daB der Abstand des in Arbeitsstellung stehenden weiteren Werkzeugs (82A) von der ersten Spindelachse (22) um mehr als einen maximal möglichen Werkstückdurchmesser größer ist als der Abstand des in Arbeitsstellung stehenden ersten Werkzeugs (62A) von der ersten Spindelachse (22).

5. Werkzeugmaschine nach einem der voranstehenden Ansprüche, **dadurch gekennzeichnet, daß** eine an dem weiteren Werkzeugträger (72) vorgesehene weitere Werkzeugaufnahme (80) des in Arbeitsstellung stehenden weiteren Werkzeugs (82) in allen Stellungen des ersten Werkzeugschlittens (50) einen größeren Abstand (A2) von der ersten Spindelachse (22) aufweist als eine an dem ersten Werkzeugträger (52) vorgesehene erste Werkzeugaufnahme (60) des in Arbeitsstellung stehenden ersten Werkzeugs (62A).

6. Werkzeugmaschine nach einem der voranstehenden Ansprüche, **dadurch gekennzeichnet, daß** der erste Werkzeugträger (52) einen um eine erste Schwenkachse (56) gegenüber einem ersten Gehäuse (54) schwenkbaren Kopf (58) aufweist.

7. Werkzeugmaschine nach Anspruch 6, **dadurch gekennzeichnet, daß** der Kopf ein Revolverkopf (58) ist, der um eine Revolverachse (56) als Schwenkachse drehbar ist.

8. Werkzeugmaschine nach einem der voranstehenden Ansprüche, **dadurch gekennzeichnet, daß** der weitere Werkzeugträger (72) einen um eine weitere Schwenkachse (76) gegenüber einem Gehäuse (74) schwenkbaren Kopf (78) aufweist.

9. Werkzeugmaschine nach Anspruch 8, **dadurch gekennzeichnet, daß** der Kopf ein Revolverkopf (78) ist, der um eine Revolverachse (76) als Schwenkachse drehbar ist.

10. Werkzeugmaschine nach Anspruch 8 oder 9, **dadurch gekennzeichnet, daß** die weitere Schwenkachse (76) in jeder Stellung des ersten Werkzeugschlittens (50) einen größeren Abstand von der ersten Spindelachse (22) aufweist als die erste Schwenkachse (56).

11. Werkzeugmaschine nach einem der Ansprüche 8 bis 10, **dadurch gekennzeichnet, daß** der um die weitere Schwenkachse (76) schwenkbare Kopf (78) in radialer Richtung zur weiteren Schwenkachse (76z) eine kleinere Erstreckung aufweist als der um die erste Schwenkachse (56) schwenkbare Kopf (58) des ersten Werkzeugträgers (52).

12. Werkzeugmaschine nach einem der voranstehenden Ansprüche, **dadurch gekennzeichnet, daß** auf einer dem ersten Werkzeugschlitten (50) gegenüberliegenden Seite der ersten Spindelachse (22) ein zweiter Werkzeugschlitten (90) mit einem zweiten Werkzeugträger (92) angeordnet ist.

13. Werkzeugmaschine nach Anspruch 12, **dadurch gekennzeichnet, daß** der zweite Werkzeugträger (92) eine Vielzahl von Werkzeugen trägt.

14. Werkzeugmaschine nach Anspruch 12 oder 13, **dadurch gekennzeichnet, daß** der zweite Werkzeugträger (92) mit der Maschinensteuerung (110) in X-Richtung positionsgesteuert bewegbar ist.

15. Werkzeugmaschine nach einem der Ansprüche 12 bis 14, **dadurch gekennzeichnet, daß** der zweite Werkzeugträger (92) mit der Maschinensteuerung (120) in Z-Richtung positionsgesteuert bewegbar ist.

16. Werkzeugmaschine nach einem der voranstehenden Ansprüche, **dadurch gekennzeichnet, daß** am Maschinengestell (10) ein bewegbarer Reitstock (120) angeordnet ist, welcher von einer inaktiven Stellung in eine aktive zu einer der Spindelachsen (22) koaxiale Stellung in den Arbeitsraum (112) hineinbewegbar ist.

17. Werkzeugmaschine nach Anspruch 16, **dadurch gekennzeichnet, daß** der Reitstock (120) in der inaktiven Stellung außerhalb des Arbeitsraums (112) angeordnet ist.

18. Werkzeugmaschine nach Anspruch 16 oder 17, **dadurch gekennzeichnet, daß** der Reitstock (120) an einer im wesentlichen außerhalb des Arbeitsraums (112) angeordneten Transfereinrichtung (126, 128, 130) gehalten ist.

19. Werkzeugmaschine nach Anspruch 18, **dadurch gekennzeichnet, daß** die Transfereinrichtung (126, 128, 130) einen den Reitstock (120) tragenden Arm (126) aufweist, mit welchem dieser in den Arbeitsraum (112) hineinbewegbar ist.

20. Werkzeugmaschine nach Anspruch 18 oder 19, **dadurch gekennzeichnet, daß** die Transfereinrichtung (126, 128, 130) den Reitstock (120) von der aktiven Stellung in die inaktive Stellung oder umgekehrt längs einer Bahn (142) bewegt, die auf einer dem ersten Werkzeugschlitten (50) gegenüberliegenden Seite der ersten Spindelachse (22) verläuft.

## Claims

1. A machine tool comprising
a machine frame (10),
a first work piece spindle (20) disposed on the machine frame (10) with a first work piece seat (24) rotatable around a first spindle axis (22), a second work piece spindle (30) disposed on the machine frame (10) with a second work piece seat (34) which is rotatable around a second spindle axis (32) and is arranged to face the first work piece seat (24), wherein the second work piece spindle (30) is movable relative to the machine frame (10) in a Z direction parallel to the first spindle axis (22) and an X direction transverse to the first spindle axis (22),
a first tool carriage (50) disposed on the machine frame (10) on one side of the first spindle axis (22) and movable at least in the X direction, its position controlled by a machine control means (110), said first tool carriage having a movable first tool carrier (52) disposed thereon, on which a plurality of tools (62) are disposed, and which can be switched over to bring a respective one of the first tools (62) into a working position,
a tool carrier (72) which is disposed on the first tool carriage (50) on a side of the first tool carrier (52) remote from the first work piece spindle, and on which there are provided further tools (82) disposed facing the second work piece seat (34), wherein in order to conduct a machining operation of a work piece (W) held in the second work piece seat (34) with the at least one further tool (82) simultaneously with a machining operation of a work piece (W) held in the first work piece seat (24) with one of the first tools (62), the second work piece spindle (30) is movable, its position controlled by means of a machine control means (110), and thus may follow the movement of the first tool carriage (50) with a constant relative position, and in addition is movable relative to the first tool carriage (50) in accordance with the provided machining operation of the work piece (W) held in the second work piece seat (34), **characterized in that** the first housing (54) of the first tool carrier (52) is disposed on a side of the first tool carrier (52) remote from the first work piece spindle (20), **in that** the further tool carrier (72) is disposed on a side of the first housing (54) remote from the first tool carrier (52), **in that** the further tool carrier (72) can be switched over independently of the first tool carrier (52) in order to bring one (82A) of the further tools (82) into a working position, and **in that**, at the further tool carrier (72), the further tool (82) occupying a working position not only as an internal but also as an external machining tool has, in all positions of the first tool carriage (50), a greater spacing from the first spindle axis (22) than the tool (62) of the first tool carrier (52) which is currently in the working position.

2. A machine tool according to claim 1, **characterized in that**, in a working position, the further tools (82) face the second work piece seat (34).

3. A machine tool according to one of the preceding claims, **characterised in that** in addition to the X direction the first tool carriage (50) is movable in a Z direction parallel to the first spindle axis (22) in a manner controlled by the machine control means (110).

4. A machine tool according to one of the preceding claims, **characterised in that** the spacing of the further tool (82A) occupying a working position from the first spindle axis (22) is greater than the spacing of the first tool (62A) occupying a working position from the first spindle axis (22) by more than a maximum possible work piece diameter.

5. A machine tool according to one of the preceding claims, **characterised in that** a further tool seat (80) of the further tools (82) occupying a working position provided on the further tool carrier (72) is at a greater spacing (A2) from the first spindle axis (22) in all positions of the first tool carriage (50) than a first tool seat (60) of the first tool (62A) occupying a working position provided on the first tool carrier (52).

6. A machine tool according to one of the preceding claims, **characterised in that** the first tool carrier (52) has a head (58) which can swivel around a first swivel axis (56) in relation to a first housing (54).

7. A machine tool according to Claim 6, **characterised in that** the head is a turret head (58), which is rotatable around a turret axis (56) as swivel axis.

8. A machine tool according to one of the preceding claims, **characterised in that** the further tool carrier (72) has a head (78) which can swivel around a further swivel axis (76) in relation to a housing (74).

9. A machine tool according to Claim 8, **characterised in that** the head is a turret head (78), which is rotatable around a turret axis (76) as swivel axis.

10. A machine tool according to claim 8 or 9, **characterised in that** the further swivel axis (76) is at a greater spacing from the first spindle axis (22) in every position of the first tool carriage (50) than the first swivel axis (56).

11. A machine tool according to one of Claims 8 to 10, **characterised in that** the head (78) which can swivel around the further swivel axis (76) has a smaller extent in the radial direction to the further swivel axis (76z) than the head (58) of the first tool carrier (52) which can swivel around the first swivel axis (56).

12. A machine tool according to one of the preceding claims, **characterised in that** a second tool carriage (90) with a second tool carrier (92) is disposed on a side of the first spindle axis (22) opposite the first tool carriage (50).

13. A machine tool according to Claim 12, **characterised in that** the second tool carrier (92) carries a multiplicity of tools.

14. A machine tool according to Claim 12 or 13, **characterised in that** the second tool carrier (92) is movable in X direction, its position controlled with the machine control means (110).

15. A machine tool according to one of Claims 12 to 14, **characterised in that** the second tool carrier (92) is movable in Z direction, its position controlled with the machine control means (120).

16. A machine tool according to one of the preceding claims, **characterised in that** there is disposed on the machine frame (10) a movable tailstock (120), which is movable from an inactive position into an active position coaxial to one of the spindle axes (22) into the working space (112).

17. A machine tool according to Claim 16, **characterised in that** the tailstock (120) is disposed outside the working space (112) in the inactive position.

18. A machine tool according to Claim 16 or 17, **characterised in that** the tailstock (120) is held on a transfer means (126, 128, 130) disposed substantially outside the working space (112).

19. A machine tool according to Claim 18, **characterised in that** the transfer means (126, 128, 130) has an arm (126) which carries the tailstock (120) and can move it into the working space (112).

20. A machine tool according to Claim 18 or 19, **characterised in that** the transfer means (126, 128, 130) moves the tailstock (120) from the active position into the inactive position or vice versa along a path (142) running on a side of the first spindle axis (22) lying opposite the first tool carriage (50).

## Revendications

1. Machine-outil comprenant,
◆ un bâti de machine (10),
◆ une première broche porte-pièce (20) disposée sur le bâti de machine (10) et comprenant un premier porte-pièce (24) rotatif autour d'un premier axe de broche (22),
◆ une seconde broche porte-pièce (30) disposée sur le bâti de machine (10) et comprenant un second porte-pièce (34) rotatif autour d'un second axe de broche (32) et disposé en regard et dirigé vers le premier porte-pièce (24), la seconde broche porte-pièce (30) pouvant être déplacée par rapport au bâti de machine (10) dans une direction Z parallèle au premier axe de broche (22) et dans une direction X transversalement au premier axe de broche (22),
◆ un premier chariot porte-outils (50) disposé sur le bâti de machine (10) sur un côté du premier axe de broche (22), et pouvant être déplacé au moins dans la direction X en étant commandé en position par une commande de machine (110), ce premier chariot porte-outils supportant un premier porte-outils (52) mobile, sur lequel sont disposés plusieurs outils (62) et qui peut être indexé pour amener respectivement l'un des premiers outils (62) dans une position de travail,
◆ un porte-outils (72) disposé sur le premier chariot porte-outils (50), sur un côté du premier porte-outils (52), qui est opposé au côté dirigé vers la première broche porte-pièce (20), et sur lequel sont prévus d'autres outils (82) dirigés vers le second porte-pièce (34), en ce que pour effectuer un usinage d'une pièce d'oeuvre (W) maintenue dans le second porte-pièce (34), à l'aide dudit au moins un autre outil (82), simultanément avec un usinage d'une pièce d'oeuvre (W) maintenue dans le premier porte-pièce (24), à l'aide d'un des premiers outils (62), la seconde broche porte-pièce (30) peut être déplacée de manière commandée en position au moyen de la commande de machine (110) en étant ainsi susceptible de suivre le mouvement du premier chariot porte-outils (50) dans une position relative constante par rapport à celui-ci, et peut en plus être déplacé par rapport au premier chariot porte-outils (50) conformément à l'usinage prévu de la pièce d'oeuvre (W) maintenue dans le second porte-pièce (34),
**caractérisée en ce que** le premier carter (54) du premier porte-outils (52) est disposé sur un côté du premier porte-outils (52), qui est opposé au côté dirigé vers la première broche porte-pièce (20), **en ce que** ledit autre porte-outils (72) est disposé sur un côté du premier carter (54), qui est opposé au côté où se trouve le premier porte-outils (52), **en ce que** ledit autre porte-outils (72) peut être indexé indépendamment du premier porte-outils (52) pour amener l'un (82A) desdits autres outils (82) dans une position de travail, et **en ce que** sur ledit autre porte-outils (72), ledit autre outil (82) se trouvant en position de travail, aussi bien en tant qu'outil d'usinage intérieur que d'outil d'usinage extérieur, présente, dans toutes les positions du premier chariot porte-outils (50), une distance plus grande au premier axe de broche (22) que le premier outil (62) respectivement en position de travail, du premier porte-outils (52).

2. Machine-outil selon la revendication 1, **caractérisée en ce que** lesdits autres outils (82) sont, dans une position de travail, dirigés vers le second porte-pièce (34).

3. Machine-outil selon l'une des revendications précédentes, **caractérisée en ce que** le premier chariot porte-outils (50) peut être déplacé, en plus de la direction X, dans une direction Z parallèle au premier axe de broche (22), en étant commandé par la commande de machine (110).

4. Machine-outil selon l'une des revendications précédentes, **caractérisée en ce que** la distance dudit autre outil (82A) se trouvant en position de travail, au premier axe de broche (22), est plus grande de plus d'un diamètre maximal possible de pièce d'oeuvre, que la distance du premier outil (62A) en position de travail, au premier axe de broche (22).

5. Machine-outil selon l'une des revendications précédentes, **caractérisée en ce qu'**un autre porte-outil (80) dudit autre outil (82) se trouvant en position de travail, qui est prévu sur ledit autre porte-outil (72), présente, dans toutes les positions du premier chariot porte-outil (50), une distance (A2) au premier axe de broche (22), plus grande qu'un premier porte-outil (60) du premier outil (62A) se trouvant en position de travail, qui est prévu sur le premier porte-outils (52).

6. Machine-outil selon l'une des revendications précédentes, **caractérisée en ce que** le premier porte-outils (52) comprend une tête (58) pouvant pivoter par rapport à un premier carter (54), autour d'un premier axe de pivotement (56).

7. Machine-outil selon la revendication 6, **caractérisée en ce que** la tête est une tourelle revolver (58) qui peut tourner autour d'un axe de tourelle revolver (56) en guise d'axe de pivotement.

8. Machine-outil selon l'une des revendications précédentes, **caractérisée en ce que** ledit autre porte-outil (72) comprend une tête (78) pouvant pivoter par rapport à un carter (74), autour d'un autre axe de pivotement (76).

9. Machine-outil selon la revendication 8, **caractérisée en ce que** la tête est une tourelle revolver (78) qui peut tourner autour d'un axe de tourelle revolver (76) en guise d'axe de pivotement.

10. Machine-outil selon la revendication 8 ou 9, **caractérisée en ce que** ledit autre axe de pivotement (76) présente, dans toutes les positions du premier chariot porte-outils (50), une distance au premier axe de broche (22), plus grande que le premier axe de pivotement (56).

11. Machine-outil selon l'une des revendications 8 à 10, **caractérisée en ce que** la tête (78) pouvant pivoter autour dudit autre axe de pivotement (76), présente, dans la direction radiale par rapport audit autre axe de pivotement (76), une étendue plus petite que la tête (58) du premier porte-outils (52), qui peut pivoter autour du premier axe de pivotement (56).

12. Machine-outil selon l'une des revendications précédentes, **caractérisée en ce que** sur un côté du premier axe de broche (22), qui est opposé au côté où se trouve le premier chariot porte-outils (502), est disposé un second chariot porte-outils (90) comprenant un second porte-outils (92).

13. Machine-outil selon la revendication 12, **caractérisée en ce que** le second porte-outils (92) porte plusieurs outils.

14. Machine-outil selon la revendication 12 ou 13, **caractérisée en ce que** le second porte-outils (92) peut être déplacé dans la direction X en étant commandé en position à l'aide de la commande de machine (110).

15. Machine-outil selon l'une des revendications 12 à 14, **caractérisée en ce que** le second porte-outils (92) peut être déplacé dans la direction Z en étant commandé en position à l'aide de la commande de machine (110).

16. Machine-outil selon l'une des revendications précédentes, **caractérisée en ce que** sur le bâti de machine (10) est disposée une contre-pointe (120) mobile, qui peut être déplacée dans l'espace de travail (112), d'une position inactive dans une position active coaxiale à l'un des axes de broche (22).

17. Machine-outil selon la revendication 16, **caractérisée en ce que** dans la position inactive, la contre-pointe (120) est disposée en-dehors de l'espace de travail (112).

18. Machine-outil selon la revendication 16 ou 17, **caractérisée en ce que** la contre-pointe (120) est supportée par un dispositif transfert (126, 128, 130) placé sensiblement en-dehors de l'espace de travail (112).

19. Machine-outil selon la revendication 18, **caractérisée en ce que** le dispositif transfert (126, 128, 130) comprend un bras (126) portant la contre-pointe (120) et à l'aide duquel celle-ci peut être déplacée dans l'espace de travail (112).

20. Machine-outil selon la revendication 18 ou 19, **caractérisée en ce que** le dispositif transfert (126, 128, 130) déplace la contre-pointe (120) de la position active à la position inactive ou inversement, le long d'une trajectoire (142) qui s'étend sur un côté du premier axe de broche (22) opposé au côté où se trouve le premier chariot porte-outils (50).
